# EUROPEAN PATENT SPECIFICATION

(11) **EP 3 088 695 B1**
(45) Date of publication and mention of the grant of the patent: **23.05.2018**
(21) Application number: 16166814.0
(22) Date of filing: 25.04.2016
(51) Int. Cl.: F01N 3/20, F01N 11/00

(54) **ABNORMALITY DETERMINATION DEVICE FOR INTERNAL COMBUSTION ENGINE**
ABNORMALITÄTSBESTIMMUNGSVORRICHTUNG FÜR EINEN VERBRENNUNGSMOTOR
DISPOSITIF DE DÉTERMINATION D'ANOMALIE POUR MOTEUR À COMBUSTION INTERNE

(30) Priority: 27.04.2015 JP 2015090457
(43) Date of publication of application: 02.11.2016
(73) Proprietor: Toyota Jidosha Kabushiki Kaisha, Toyota-shi, Aichi-ken, 471-8571 (JP)
(72) Inventor: TAKASU, Yuji, TOYOTA-SHI, AICHI-KEN, 471-8571 (JP); OTA, Hirohiko, TOYOTA-SHI, AICHI-KEN, 471-8571 (JP)
(74) Representative: Intès, Didier Gérard André

(56) References cited:
- EP-A1- 2 278 144
- JP-A- 2012 036 840

## Description

### BACKGROUND OF THE INVENTION

### 1. Field of the Invention

The invention relates to an abnormality determination device for an internal combustion engine and, more particularly, to a device that determines an abnormality of urea water which is added to an exhaust passage of an internal combustion engine.

### 2. Description of Related Art

An exhaust gas control apparatus for an automotive internal combustion engine disclosed in Japanese Patent Application Publication No. 2012-36840 (JP 2012-36840 A) is provided with a selective reduction-type NOx catalyst (SCR catalyst) that is disposed in an exhaust passage and removes NOx contained exhaust gas of the internal combustion engine by a reduction reaction using ammonia. In this exhaust gas control apparatus, urea water is added to the exhaust gas flowing through the upstream side of the SCR catalyst so that the ammonia is supplied to the SCR catalyst.

JP 2012-36840 A also discloses an abnormality determination device that determines an abnormality of a concentration of the urea water. This abnormality determination device is provided with a NOx sensor that detects a value of the NOx in the exhaust gas on the downstream side of the SCR catalyst. The abnormality determination device calculates a difference between a first NOx value and a second NOx value. The first NOx value is a value that is detected by the NOx sensor when the addition of the urea water is prohibited, and the second NOx value is a value that is detected by the NOx sensor during the addition of the urea water. This abnormality determination device determines that the concentration of the urea water is an adequate concentration in a case where the calculated difference between the first NOx value and the second NOx value is equal to or higher than a predetermined value and determines that the concentration of the urea water is not the adequate concentration but an abnormal concentration in a case where the calculated difference between the first NOx value and the second NOx value is lower than the predetermined value.

### SUMMARY OF THE INVENTION

In some cases, the ammonia is not supplied to the SCR catalyst in a desired amount, even if a urea water adding valve is controlled such that the urea water equivalent in amount to a predetermined amount is added into the exhaust gas, in the case of an abnormality such as a blocking of the adding valve that is attributable to deposit adhesion to the adding valve or an operation failure of the adding valve and deposit adhesion-based blocking of a dispersion plate which disperses the urea water in the exhaust passage. In this case, NOx purification is not performed in an appropriate manner, even if the concentration of the urea water is the adequate concentration, because the SCR catalyst is not supplied with the ammonia equivalent in amount to the desired amount. Accordingly, the difference between the NOx value preceding the addition control and the NOx value subsequent to the addition control might be lower than the predetermined value. Accordingly, when it is determined whether or not the concentration of the urea water is the adequate concentration based on the NOx value preceding the addition control and the NOx value subsequent to the addition control in this case, it is erroneously determined that the concentration of the urea water is abnormal despite the concentration of the urea water being in fact the adequate concentration.

The invention provides an abnormality determination device for an internal combustion engine that is capable of suppressing an erroneous determination that urea water has an abnormal concentration despite the urea water having in fact an adequate concentration.

According to an aspect of the invention, an abnormality determination device for an internal combustion engine is provided. The internal combustion engine includes a NOx purification catalyst and a reducing agent supply mechanism. The NOx purification catalyst is disposed in an exhaust passage of the internal combustion engine. The NOx purification catalyst is configured to purify the NOX in the exhaust gas. The reducing agent supply mechanism is disposed on an upstream side of the NOx purification catalyst in the exhaust passage. The reducing agent supply mechanism adds urea water to the exhaust gas flowing through the exhaust passage such that ammonia originating from the urea water is supplied to the NOx purification catalyst as a reducing agent. The abnormality determination device includes a NOx sensor and an electronic control unit. The NOx sensor is configured to detect the amount of the NOx contained in the exhaust gas flowing through a downstream side of the NOx purification catalyst in the exhaust passage. The electronic control unit is configured to determine, as an abnormality determination processing, that a concentration of the urea water is an abnormal concentration in a case where a difference between a first NOx amount and a second NOx amount detected by the NOx sensor is equal to or lower than a predetermined value and in a case where a difference between a first exhaust gas temperature and a second exhaust gas temperature exceeds a predetermined temperature. The first NOx amount is the amount of the NOx detected by the NOx sensor during non-execution of the addition of the urea water by the reducing agent supply mechanism. The second NOx amount is the amount of the NOx detected by the NOx sensor during execution of the addition of the urea water by the reducing agent supply mechanism. The first exhaust gas temperature is a temperature of the exhaust gas during the non-execution of the addition of the urea water by the reducing agent supply mechanism. The second exhaust gas temperature is the temperature of the exhaust gas during the execution of the addition of the urea water by the reducing agent supply mechanism.

When the urea water is added to the exhaust gas, the urea water is exposed to the high-temperature exhaust gas and evaporates. Accordingly, the exhaust gas is deprived of heat by the heat of evaporation of the urea water and the temperature of the exhaust gas is lowered. Accordingly, when the difference between the exhaust gas temperature during the non-execution of the urea water addition and the temperature that the exhaust gas has when the urea water is added does not exceed the predetermined temperature, it is estimated that the amount of the heat which the exhaust gas is deprived of by the heat of evaporation of the urea water is small despite the control of the urea water addition by the reducing agent supply mechanism. In this case, the amount of the added urea water is highly likely to decrease or the amount of the evaporating urea water is highly likely to decrease because of an abnormality that the reducing agent supply mechanism is subjected to, examples of which include blocking of an adding valve attributable to deposit adhesion to the adding valve, an operation failure of the adding valve, and the like and blocking of a dispersion plate attributable to deposit adhesion. The predetermined temperature may be set to a temperature at which it can be determined, when the difference between the exhaust gas temperature during the non-execution of the urea water addition and the temperature that the exhaust gas has when the urea water is added exceeds the predetermined temperature, that the exhaust gas is sufficiently deprived of the heat of the exhaust gas by the urea water evaporating with the reducing agent supply mechanism being subjected to no abnormality. Accordingly, the predetermined temperature can be set based on, for example, the amount of temperature change by which the exhaust gas temperature is lowered by the urea water appropriately evaporating in a case where an adequate amount of the urea water is added by the reducing agent supply mechanism working normally.

According to the abnormality determination device of the above-described aspect, the abnormality determination processing regarding the concentration of the urea water that is added to the exhaust passage of the internal combustion engine is executed on a condition that the difference between the exhaust gas temperature during the non-execution of the urea water addition by the reducing agent supply mechanism and the temperature that the exhaust gas has when the urea water is added by the reducing agent supply mechanism exceeds the predetermined temperature described above. Accordingly, the concentration abnormality determination processing is executed on a condition that the reducing agent supply mechanism is highly likely to be subjected to no abnormality. In other words, the urea water concentration abnormality determination processing is executed when the reducing agent supply mechanism is highly likely to be subjected to no abnormality whereas the urea water concentration abnormality determination processing is not executed when the reducing agent supply mechanism is highly likely to be subjected to the abnormality. Accordingly, the risk can be suppressed that it is erroneously determined that the urea water concentration is abnormal despite the urea water having in fact an adequate concentration, such an erroneous determination being attributable to non-supply of a desired amount of ammonia to the NOx purification catalyst resulting from the abnormality of the reducing agent supply mechanism despite the reducing agent supply mechanism being controlled such that a predetermined amount of the urea water is added to the exhaust gas for the urea water concentration abnormality determination.

In the abnormality determination device according to the aspect described above, the electronic control unit may be configured to control the reducing agent supply mechanism prior to the abnormality determination processing such that the urea water equivalent in amount to a first predetermined amount is added as a provisional addition. The electronic control unit may be configured to execute the abnormality determination processing in a case where the amount of lowering of the temperature of the exhaust gas at a time when the provisional addition is performed exceeds the predetermined temperature. The electronic control unit may be configured to execute the addition of the urea water equivalent in amount to a second predetermined amount by controlling the reducing agent supply mechanism during the abnormality determination processing. The second NOx amount may be the amount of the NOx detected by the NOx sensor when the addition of the urea water equivalent in amount to the second predetermined amount is performed.

In the abnormality determination device according to the aspect described above, the first predetermined amount may be larger than the second predetermined amount in a case where an aspect according to which the provisional addition is executed is adopted. According to this aspect, the first predetermined amount exceeds the second predetermined amount, and thus the exhaust gas temperature is more likely to be lowered in a case where the provisional addition is executed in a situation in which the reducing agent supply mechanism is subjected to no abnormality than in a case where the urea water equivalent in amount to the second predetermined amount is added to the exhaust gas. Accordingly, the amount of the lowering of the exhaust gas temperature attributable to the provisional addition increases, and thus an erroneous determination attributable to a temperature detection error or the like can be suppressed during the determination of whether or not the exhaust gas temperature is lowered by at least the predetermined temperature through the provisional addition.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic diagram illustrating an internal combustion engine to which a urea water abnormality determination device according to an embodiment is applied;
FIG. 2 is a flowchart illustrating an execution procedure of an abnormality determination processing that is executed by the abnormality determination device according to this embodiment; and
FIG. 3 is a flowchart illustrating the execution procedure of the abnormality determination processing that is executed by the abnormality determination device according to this embodiment.

### DETAILED DESCRIPTION OF EMBODIMENTS

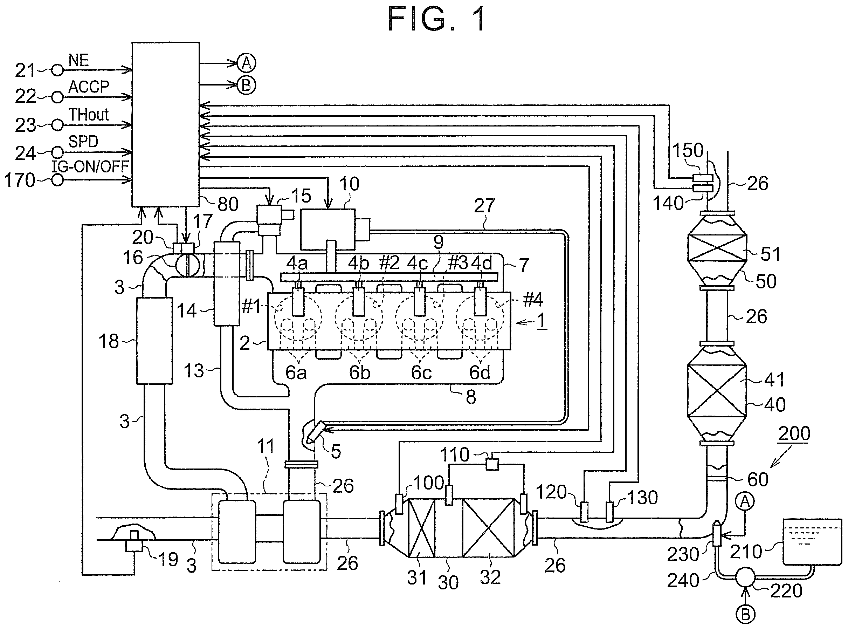

Hereinafter, an embodiment of a urea water abnormality determination device will be described with reference to FIGS. 1 to 3. The urea water abnormality determination device according to this embodiment is applied to an automotive internal combustion engine that is provided with an exhaust gas control apparatus that purifies exhaust gas by adding urea water to the exhaust gas flowing through an exhaust passage. The internal combustion engine according to this embodiment is a diesel engine, which will be simply referred to as an "engine" hereinbelow.

As illustrated in FIG. 1, four cylinders #1 to #4 are disposed in an engine 1. Four fuel injection valves 4a to 4d are attached to a cylinder head 2. These fuel injection valves 4a to 4d inject a fuel into combustion chambers of the corresponding cylinders #1 to #4. In addition, an intake port for introducing fresh air into the cylinders and exhaust ports 6a to 6d for discharging combustion gas out of the cylinders are disposed in the cylinder head 2 corresponding to the respective cylinders #1 to #4.

The fuel injection valves 4a to 4d are connected to a common rail 9 that accumulates a high-pressure fuel. The common rail 9 is connected to a supply pump 10. The supply pump 10 suctions the fuel in a fuel tank and supplies the high-pressure fuel to the common rail 9. When the fuel injection valves 4a to 4d are open, the high-pressure fuel supplied to the common rail 9 is injected into the cylinders #1 to #4 from the respective fuel injection valves 4a to 4d.

An intake manifold 7 is connected to the intake port. The intake manifold 7 is connected to an intake passage 3. An intake throttle valve 16 for suctioned air amount adjustment is disposed in the intake passage 3.

An exhaust manifold 8 is connected to the exhaust ports 6a to 6d. The exhaust manifold 8 is connected to an exhaust passage 26. A turbocharger 11, which supercharges suctioned air introduced into the cylinders by using an exhaust gas pressure, is disposed in the middle of the exhaust passage 26. On the intake passage 3, an intercooler 18 is disposed between an intake side compressor of the turbocharger 11 and the intake throttle valve 16. The intercooler 18 cools the suctioned air with a temperature raised by the supercharging performed by the turbocharger 11.

A first purification member 30 that purifies the exhaust gas is disposed on the downstream side of an exhaust side turbine of the turbocharger 11 and in the middle of the exhaust passage 26. In the first purification member 30, an oxidation catalyst 31 and a DPF catalyst 32 are arranged in series with respect to a direction in which the exhaust gas flows.

A catalyst that performs an oxidation treatment on HC in the exhaust gas is supported on the oxidation catalyst 31. The DPF catalyst 32 is a filter that collects particulate matter (PM) in the exhaust gas and is configured to use porous ceramic. A catalyst that promotes PM oxidation is supported on the DPF catalyst 32. The PM in the exhaust gas is collected when the exhaust gas passes through a porous wall of the DPF catalyst 32.

A fuel adding valve 5 for supplying the fuel to the oxidation catalyst 31 and the DPF catalyst 32 by injecting the fuel is disposed in the vicinity of a merging portion of the exhaust manifold 8. The fuel adding valve 5 is connected to the supply pump 10 via a fuel supply pipe 27. A position at which the fuel adding valve 5 is arranged can be appropriately changed insofar as the position is on the upstream side of the first purification member 30 in an exhaust system.

A second purification member 40 that purifies the exhaust gas is disposed on the downstream side of the first purification member 30 and in the middle of the exhaust passage 26. A selective reduction-type NOx catalyst (hereinafter, referred to as a SCR catalyst) 41 as a NOx purification catalyst that purifies the exhaust gas of NOx by using ammonia is arranged in the second purification member 40.

A third purification member 50 that purifies the exhaust gas is disposed on the downstream side of the second purification member 40 and in the middle of the exhaust passage 26. An ammonia oxidation catalyst 51 that purifies the exhaust gas of ammonia is arranged in the third purification member 50.

A reducing agent supply mechanism 200 for supplying ammonia to the SCR catalyst 41 is disposed in the engine 1. The reducing agent supply mechanism 200 supplies the urea water into the exhaust passage 26 and promotes atomization of the urea water. The reducing agent supply mechanism 200 is provided with a tank 210 that stores the urea water, a urea adding valve 230 that performs urea water injection addition into the exhaust passage 26, a supply passage 240 that connects the urea adding valve 230 and the tank 210 to each other, a pump 220 that sends the urea water from the tank 210 to the urea adding valve 230, and a dispersion plate 60 that is disposed in the exhaust passage 26.

The urea adding valve 230 is disposed between the first purification member 30 and the second purification member 40 on the exhaust passage 26. The urea adding valve 230 has an injection hole directed toward the SCR catalyst 41. When the urea adding valve 230 is open, the urea water is supplied by injection into the exhaust passage 26 via the supply passage 240. In other words, the urea water is added to the exhaust gas flowing through the exhaust passage 26.

The pump 220 is an electric pump. During a positive rotation of the pump 220, the pump 220 feeds the urea water toward the urea adding valve 230 from the tank 210. During a reverse rotation of the pump 220, the pump 220 feeds the urea water toward the tank 210 from the urea adding valve 230. In other words, during the reverse rotation of the pump 220, the urea water is recovered from the urea adding valve 230 and the supply passage 240 and is returned to the tank 210.

The dispersion plate 60 is disposed between the urea adding valve 230 and the SCR catalyst 41 in the exhaust passage 26. The dispersion plate 60 promotes the atomization of the urea water by dispersing the urea water injected from the urea adding valve 230.

The urea water added from the urea adding valve 230 turns into ammonia through hydrolysis using exhaust heat. This ammonia is adsorbed onto the SCR catalyst 41. Then, NOx reduction purification is carried out by the ammonia adsorbed on the SCR catalyst 41. Depending on engine operation states, some of the urea water adheres to the SCR catalyst 41 instead of being hydrolyzed into the ammonia.

The engine 1 is provided with an exhaust gas recirculation device (hereinafter, referred to as an EGR device), too. This EGR device is a device that reduces a NOx generation amount by introducing some of the exhaust gas into the suctioned air and lowering a combustion temperature in the cylinder. An EGR passage 13 that allows the intake passage 3 and the exhaust manifold 8 to communicate with each other, an EGR valve 15 and an EGR cooler 14 that are disposed on the EGR passage 13, and the like constitute this EGR device. A reflux amount of the exhaust gas that is introduced into the intake passage 3 from the exhaust passage 26, which is a so-called external EGR amount, is adjusted by the adjustment of an opening degree of the EGR valve 15. A temperature of the exhaust gas that flows through the EGR passage 13 is lowered by the EGR cooler 14.

Various sensors and switches for engine operation state detection are attached to the engine 1. For example, an air flow meter 19 detects a suctioned air amount GA in the intake passage 3. A throttle valve opening degree sensor 20 detects an opening degree of the intake throttle valve 16. An engine rotation speed sensor 21 detects a crankshaft rotation speed, that is, an engine rotation speed NE. An accelerator operation amount sensor 22 detects an accelerator pedal depression amount, that is, an accelerator operation amount ACCP. An outside air temperature sensor 23 detects an outside air temperature THout. A vehicle speed sensor 24 detects a vehicle speed SPD of a vehicle in which the engine 1 is mounted. An ignition switch 170 switches states of electric power supply to each section of the vehicle associated with starting and stopping of the engine 1 by being operated by a driver of the vehicle.

A first exhaust gas temperature sensor 100 that is disposed on the upstream side of the oxidation catalyst 31 detects a first exhaust gas temperature TH1, which is the temperature of the exhaust gas that has yet to flow into the oxidation catalyst 31. A differential pressure sensor 110 detects a pressure difference ΔP between the pressure of the exhaust gas on the upstream side of the DPF catalyst 32 and the pressure of the exhaust gas on the downstream side of the DPF catalyst 32.

On the exhaust passage 26, a second exhaust gas temperature sensor 120 and a first NOx sensor 130 are disposed on the upstream side of the urea adding valve 230 and between the first purification member 30 and the second purification member 40. The second exhaust gas temperature sensor 120 detects a second exhaust gas temperature TH2, which is the temperature of the exhaust gas that has yet to flow into the SCR catalyst 41. The first NOx sensor 130 detects a first NOx concentration N1, which is a NOx concentration of the exhaust gas, as the amount of the NOx contained in the exhaust gas that has yet to flow into the SCR catalyst 41.

On the exhaust passage 26, a third exhaust gas temperature sensor 140 and a second NOx sensor 150 are disposed on the downstream side of the third purification member 50. The third exhaust gas temperature sensor 140 detects a third exhaust gas temperature TH3, which is the temperature that the exhaust gas has after passing through the SCR catalyst 41. The second NOx sensor 150 detects a second NOx concentration N2, which is a NOx concentration of the exhaust gas, as the amount of the NOx contained in the exhaust gas after the passage of the exhaust gas through the SCR catalyst 41.

Outputs from the various sensors are input to a control device 80. This control device 80 is configured to have a microcomputer as a main component. The microcomputer is provided with a central processing unit (CPU), a read-only memory (ROM) in which various programs, calculation maps, and the like are stored in advance, a random access memory (RAM) that temporarily stores a calculation result of the CPU and the like, a timer counter, an input interface, an output interface, and the like.

Various types of controls for the engine 1 are performed by the control device 80, examples of which include fuel injection quantity controls, fuel injection timing controls for the fuel injection valves 4a to 4d and the fuel adding valve 5, a discharge pressure control for the supply pump 10, a driving amount control for an actuator 17 that opens and closes the intake throttle valve 16, an opening degree control for the EGR valve 15, and an exhaust gas purification control.

The control device 80 controls urea water addition by the urea adding valve 230 as an example of the exhaust gas purification control. During this addition control, a target urea water addition amount QE is calculated through an equivalence ratio control for adjusting the amount of the urea water addition in accordance with the NOx concentration of the exhaust gas.

During this equivalence ratio control, the control device 80 calculates a target equivalence ratio TT based on the suctioned air amount GA and the second exhaust gas temperature TH2. This target equivalence ratio TT is a urea water addition amount with no excess or deficiency that is required for a reduction treatment of the NOx and addition amount that is required per unit NOx concentration (such as an addition amount that is required for a complete reduction of 1 ppm of NOx). Because the addition amount that is required per unit NOx concentration tends to increase as the suctioned air amount GA increases (that is, as a flow rate of the exhaust gas increases) or as the second exhaust gas temperature TH2 increases, the target equivalence ratio TT is variably set such that the target equivalence ratio TT has a value which increases as the suctioned air amount GA increases or the second exhaust gas temperature TH2 increases. Then, the target addition amount QE corresponding to the current NOx generation amount is calculated by the target equivalence ratio TT being multiplied by the first NOx concentration N1. By the target addition amount QE being calculated as described above, the target addition amount QE increases as the first NOx concentration N1 increases, that is, as the amount of the NOx discharged from the combustion chamber of the engine 1 increases.

The control device 80 controls an open state of the urea adding valve 230 such that the urea water equivalent in amount to the target addition amount QE is added from the urea adding valve 230 by intermittent addition from the urea adding valve 230 being performed at predetermined time intervals.

In a case where the urea water that is added has an inadequate concentration, the SCR catalyst 41 is not supplied with the ammonia which has the amount required for the reduction treatment of the NOx even in the event of urea addition equivalent in amount to the target addition amount QE into the exhaust gas, and then an appropriate NOx purification is not performed. In this regard, the control device 80 executes an abnormality determination processing regarding the urea water concentration. During this abnormality determination processing, it is determined that the urea water concentration is abnormal and is out of a range of an adequate concentration for the NOx purification on a condition that a value which is obtained by subtracting the second NOx concentration N2 during the addition of the urea water from the second NOx concentration N2 detected by the second NOx sensor 150 when the urea adding valve 230 adds no urea water is equal to or lower than a predetermined value. In this embodiment, the urea water abnormality determination device is applied to the exhaust gas control apparatus provided with the reducing agent supply mechanism 200 and the SCR catalyst 41 and is provided with this control device 80 and the second NOx sensor 150.

In a case where the urea water that is equivalent in amount to the target addition amount QE is not added from the urea adding valve 230 or the atomization is not performed in an appropriate manner with the dispersion plate 60 blocked in part, the SCR catalyst 41 is not supplied with the ammonia which has the amount required for the purification of the NOx in some cases even when the urea adding valve 230 is controlled such that the urea water which has the adequate concentration and is equivalent in amount to the target addition amount QE is added to the exhaust gas. In other words, in a case where the reducing agent supply mechanism 200 is subjected to such an abnormality, the NOx purification is not performed in an appropriate manner, due to the non-supply of the ammonia equivalent in amount to a required amount to the SCR catalyst 41, even in the case of the addition of the urea water that has the adequate concentration, and then a difference between the second NOx concentration N2 preceding the urea water addition by the urea adding valve 230 and the second NOx concentration N2 subsequent to the urea water addition by the urea adding valve 230 becomes equal to or lower than the predetermined value in some cases. Accordingly, in this case, it is erroneously determined that the urea water concentration is abnormal despite the urea water having in fact the adequate concentration.

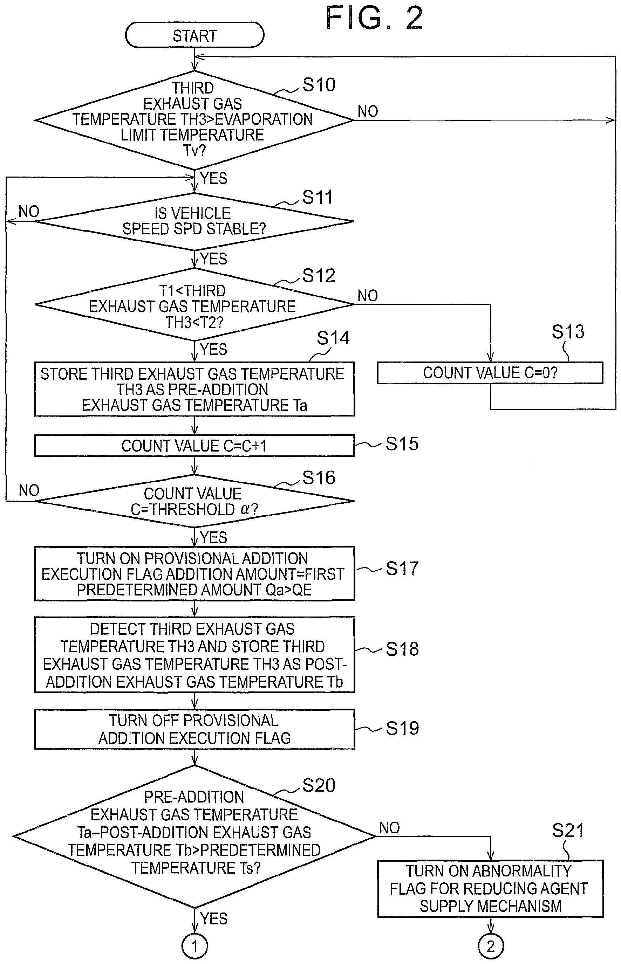

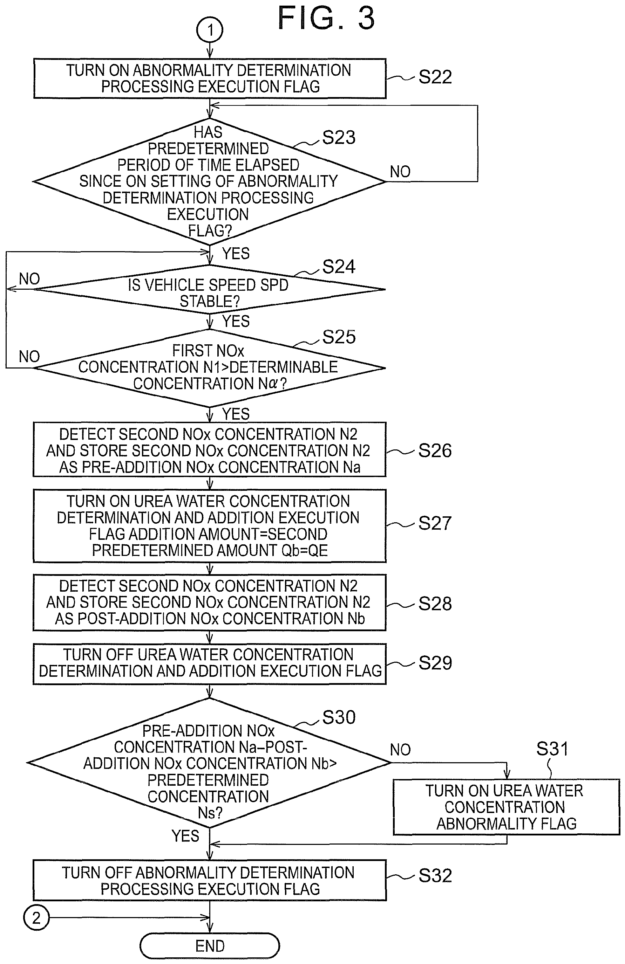

In this regard, the control device 80 determines a state of the reducing agent supply mechanism 200 based on the third exhaust gas temperature TH3 that is detected by the third exhaust gas temperature sensor 140, and executes the abnormality determination processing regarding the urea water concentration on a condition that the reducing agent supply mechanism 200 is determined to be subjected to no abnormality. Specifically, the abnormality determination processing regarding the reducing agent supply mechanism 200 and the abnormality determination processing regarding the urea water concentration are executed in accordance with the processing procedure that is illustrated in the flowcharts in FIGS. 2 and 3. A series of this processing that is illustrated in FIGS. 2 and 3 is executed once by the control device 80 when the ignition switch 170 is switched from an OFF state to an ON state, that is, executed once per trip (until the stopping of the engine after the starting of the engine). The normal urea water addition control for the NOx purification described above is executed after this processing is terminated.

As illustrated in FIG. 2, it is determined in Step S10, after this processing is started, whether or not the temperature of the exhaust gas on the downstream side of the SCR catalyst 41 that is detected by the third exhaust gas temperature sensor 140, that is, the third exhaust gas temperature TH3 exceeds an evaporation limit temperature Tv. This evaporation limit temperature Tv is set to a temperature that is higher than a lower limit value of the temperature at which the added urea water evaporates. In Step S10, it is determined whether or not the temperature of the exhaust gas allows the evaporation of almost all the added urea water in a case where the urea water is added into the exhaust gas by the urea adding valve 230. In the event of a negative determination in Step S10 (Step S10: NO), the determination of Step S10 is performed again and this determination is repeated until a positive determination is made in Step S10.

After it is determined in Step S10 that the third exhaust gas temperature TH3 exceeds the evaporation limit temperature Tv (Step S10: YES), the processing proceeds to Step S11 and it is determined whether or not the vehicle speed SPD is stable. In Step S11, it is determined that the vehicle speed SPD is stable in case where a variation of the vehicle speed SPD detected by the vehicle speed sensor 24 is within a predetermined range for at least a predetermined period of time. Step S11 allows a determination of whether or not the engine operation state is stable, that is, whether or not the temperature of the exhaust gas discharged from the combustion chamber has a low level of fluctuation in the current situation. In the event of a negative determination in Step S11 (Step S11: NO), the processing proceeds back to Step S11.

Upon a positive determination being made in Step S11 (Step S11: YES), the processing proceeds to Step S12 and it is determined, based on a detection signal of the third exhaust gas temperature sensor 140, whether or not the third exhaust gas temperature TH3 is within a temperature range requiring the addition of the urea water. The addition of the urea water is required in a situation in which the SCR catalyst 41 is active. Accordingly, in Step S12, it is determined that the third exhaust gas temperature TH3 is within the temperature range requiring the addition of the urea water in a case the third exhaust gas temperature TH3 is within a specific range of a lower limit temperature T1 to a upper limit temperature T2 of the exhaust gas temperature representing that the SCR catalyst 41 is active. In the event of a negative determination in Step S12 (Step S12: NO), the processing proceeds to Step S13, a count value is set to "0", and the processing proceeds to Step S10. This count value, as described later, is to count a period of time during which the third exhaust gas temperature TH3 is within the temperature range requiring the urea water addition.

After it has been determined that the third exhaust gas temperature TH3 is within the temperature range requiring the urea water addition in Step S12 (Step S12: YES), the processing proceeds to Step S14 and the third exhaust gas temperature TH3 at that time is stored as a pre-addition exhaust gas temperature Ta, which is the temperature that the exhaust gas has before provisional urea water addition (described later) is performed. In Step S14, the value stored in the past is removed and the latest third exhaust gas temperature TH3 is stored as the pre-addition exhaust gas temperature Ta every time a positive determination is made in Step S14. This pre-addition exhaust gas temperature Ta corresponds to the exhaust gas temperature during the non-execution of the urea water addition.

Then, the processing proceeds to Step S15 and the period of time during which the third exhaust gas temperature TH3 is within the temperature range requiring the urea water addition is counted. A count value C is set to "0" when the engine is started and when the processing of Step S13 is performed and "1" is added thereto every time the processing of Step S15 is performed. Then, the processing proceeds to Step S16 and it is determined whether or not the count value C is at a threshold α. The threshold α is set to a value with which it can be determined, by the count value C reaching the threshold α, whether or not the third exhaust gas temperature TH3 is stable within the temperature range requiring the urea water addition. In other words, Step S16 is a processing for determining whether or not the third exhaust gas temperature TH3 is stable within the temperature range requiring the urea water addition. When it is determined that the count value has not yet reached the threshold α is made in Step S16 (Step S16: NO), the processing proceeds to Step S11. When it is determined in Step S16 that the count value C is at the threshold α (Step S16: YES), the processing proceeds to Step S17.

In Step S17, a provisional addition execution flag is turned "ON" so that the provisional addition for determining the state of the reducing agent supply mechanism 200 is executed. Then, the provisional addition is executed. Specifically, the control device 80 controls the urea adding valve 230 so that the urea adding valve 230 adds the urea water which is equivalent in amount to a first predetermined amount Qa required for lowering the third exhaust gas temperature TH3. Although the target addition amount QE, which is the urea water addition amount for the reduction purification of the NOx, changes in accordance with the engine operation state, the first predetermined amount Qa is set to an amount exceeding an upper limit of the amount by which the target addition amount QE can change. When the urea water that is equivalent in amount to the target addition amount QE is added from the urea adding valve 230, the control device 80 controls the urea adding valve 230 such that the urea adding valve 230 performs the intermittent addition. In contrast, during the provisional addition, the control device 80 allows the urea adding valve 230 to remain open for a period of time that is longer than the valve-opening period pertaining to the intermittent addition and controls the urea adding valve 230 such that the urea water equivalent in amount to the first predetermined amount Qa is added to the exhaust gas through a single injection. Then, the processing proceeds to Step S18, the third exhaust gas temperature TH3 is detected, and the detected temperature is stored as a post-addition exhaust gas temperature Tb. This post-addition exhaust gas temperature Tb corresponds to the temperature that the exhaust gas has during the execution of the urea water addition. Then, the processing proceeds to Step S19 and the provisional addition flag is turned "OFF".

Then, the processing proceeds to Step S20 and it is determined whether or not a value that is obtained by subtracting the post-addition exhaust gas temperature Tb from the pre-addition exhaust gas temperature Ta exceeds a predetermined temperature Ts. In some cases, the urea water that is equivalent in amount to the first predetermined amount Qa is not added, even though the urea adding valve 230 is controlled such that the urea water equivalent in amount to the first predetermined amount Qa is added, due to blocking of the urea adding valve 230 attributable to deposit adhesion thereto, its operation failure, and the like, an operation failure of the urea water pump 220, or the like. In addition, even in a case where the urea water that is equivalent in amount to the first predetermined amount Qa is added, a situation arises in some cases in which the atomization of the urea water is not fully performed and the urea water is unlikely to evaporate due to blocking of the dispersion plate 60 attributable to deposit adhesion. In other words, in a case where the reducing agent supply mechanism 200 is subjected to such an abnormality, a situation in which the urea water equivalent in amount to the first predetermined amount Qa is not added and a situation in which the urea water is unlikely to evaporate arise, and thus the value obtained by subtracting the post-addition exhaust gas temperature Tb from the pre-addition exhaust gas temperature Ta becomes equal to or lower than the predetermined temperature Ts. In other words, the predetermined temperature Ts is set to a temperature at which it can be determined, by the value obtained by subtracting the post-addition exhaust gas temperature Tb from the pre-addition exhaust gas temperature Ta exceeding the predetermined temperature Ts, that the reducing agent supply mechanism 200 is subjected to no abnormality. Accordingly, in Step S20, a determination of whether or not the reducing agent supply mechanism 200 is abnormal is performed.

Specifically, a reference value is calculated for the amount of the lowering of the exhaust gas temperature attributable to the supply of the urea water into the exhaust gas and the exhaust gas being deprived of heat as a result of the evaporation of almost all the added urea water in the case of the addition of the urea water equivalent in amount to the first predetermined amount Qa and is set in advance through an experiment, simulation, or the like. Even in a case where the urea water equivalent in amount to the first predetermined amount Qa is added, the amount of the lowering of the exhaust gas temperature can change depending on the engine operation state such as the exhaust gas flow rate as well, and thus the predetermined temperature Ts is set with a correction performed during the execution of Step S20 on the reference value for the amount of the lowering of the temperature by a parameter such as the suctioned air amount GA.

In the case of a positive determination in Step S20 (Step S20: YES), it can be determined that the reducing agent supply mechanism 200 functions in a normal manner. Then, the processing proceeds to Step S22 that is illustrated in FIG. 3.

As illustrated in FIG. 3, an abnormality determination processing execution flag is set to "ON" in Step S22. Then, the processing proceeds to Step S23 and it is determined whether or not a predetermined period of time has elapsed since the "ON" setting of the abnormality determination processing execution flag. This predetermined period of time is set to a predetermined period of time with which it can be determined, by the elapse of the predetermined period of time since the "ON" setting of the abnormality determination processing execution flag, that the second NOx concentration N2 is an appropriate value of the NOx concentration during the non-execution of the urea water addition in a case where the second NOx concentration N2 is detected by the second NOx sensor 150 in Step S26 (described later). In other words, during the provisional addition, the amount of the ammonia adsorbed onto the SCR catalyst 41 increases because the urea water equivalent in amount to the first predetermined amount Qa, which exceeds the target addition amount QE, is added. Accordingly, during a certain period of time subsequent to the provisional addition, the NOx reduction is performed by the ammonia adsorbed on the SCR catalyst 41 even without any urea water addition, and thus the value of the second NOx concentration N2 is not the appropriate value of the NOx concentration during the non-execution of the urea water addition even if the second NOx concentration N2 is detected without the urea water addition being executed. In addition, the ammonia resulting from the provisional addition might pass through the SCR catalyst 41 and the ammonia oxidation catalyst 51, and this ammonia passing through the SCR catalyst 41 and the ammonia oxidation catalyst 51 might be erroneously detected as NOx by the second NOx sensor 150. Accordingly, this also might cause the value of the second NOx concentration N2 to be detected as a concentration including a concentration of the ammonia as well even if the second NOx concentration N2 during the non-execution of the urea water addition is detected, and the value of the second NOx concentration N2 is not the appropriate value of the NOx concentration during the non-execution of the urea water addition. In this regard, the predetermined period of time is set to a predetermined period of time with which it can be estimated that the amount of the ammonia adsorbed on the SCR catalyst 41 decreases to a predetermined amount substantially equal to the amount during the non-execution of the urea water addition and the exhaust gas during the execution of the provisional addition reaches the downstream side of the second NOx sensor 150. This setting of the predetermined period of time is performed by calculation based on the suctioned air amount GA, the first predetermined amount Qa, and the like when the processing of Step S23 is executed for the first time.

After it has been determined in Step S23 that the predetermined period of time has not elapsed since the "ON" setting of the abnormality determination processing execution flag (Step S23: NO), the processing proceeds back to Step S23. In contrast, the processing proceeds to Step S24 after it has been determined in Step S23 (Step S23: YES) that the predetermined period of time has elapsed. In Step S24, it is determined whether or not the vehicle speed SPD is stable. In Step S24, it is determined that the vehicle speed SPD is stable when the variation of the vehicle speed SPD detected by the vehicle speed sensor 24 is within a predetermined range for at least a predetermined period of time. Step S24 allows a determination of whether or not the engine operation state is stable, that is, whether or not the NOx concentration of the exhaust gas discharged from the internal combustion engine has a low level of fluctuation in the current situation. In the event of a negative determination in Step S24 (Step S24: NO), the processing proceeds back to Step S24.

In contrast, upon a positive determination being made in Step S24 (Step S24: YES), the processing proceeds to Step S25 and it is determined whether or not the first NOx concentration N1 of the exhaust gas flowing through the upstream side of the SCR catalyst 41 that is detected by the first NOx sensor 130 exceeds a determinable concentration Nα. In a case where the first NOx concentration N1 is low, the second NOx concentration N2, which is the NOx concentration of the exhaust gas flowing through the downstream side of the SCR catalyst 41 before the addition of the urea water, becomes low as well. Accordingly, even if the abnormality determination regarding the concentration of the urea water is performed based on the amount of change in the second NOx concentration N2 attributable to the urea water addition, the amount of change is not substantial, and thus the abnormality determination regarding the urea water concentration cannot be appropriately performed. In this regard, the determinable concentration Na is set to a concentration that is equal to or higher than a lower limit value of the NOx concentration of the exhaust gas on the upstream side of the SCR catalyst 41 at which the urea water concentration can be determined by the NOx concentration of the exhaust gas on the downstream side of the SCR catalyst 41 that is capable of appropriately changing based on the addition of the urea water. The processing proceeds to Step S24 after a negative determination is made in Step S25 (Step S25: NO).

In a case where a positive determination is made in Step S25 (Step S25: YES), the processing proceeds to Step S26 and the second NOx concentration N2, which is the NOx concentration of the exhaust gas on the downstream side of the SCR catalyst 41 that is detected by the second NOx sensor 150, is stored as a pre-addition NOx concentration Na. The pre-addition NOx concentration Na corresponds to the amount of the NOx that is detected during the non-execution of the urea water addition.

Then, the processing proceeds to Step S27 and a urea water concentration determination and addition execution flag for urea water concentration determination and urea water addition execution is set to "ON". Then, the control device 80 controls the urea adding valve 230 such that the urea water equivalent in amount to a second predetermined amount Qb is added from the urea adding valve 230. The second predetermined amount Qb is equal to the target addition amount QE and is calculated by the control device 80. Accordingly, the second predetermined amount Qb is set to an amount that is smaller than the first predetermined amount Qa, which is the urea water addition amount for the provisional addition. Then, the control device 80 controls the urea adding valve 230, in a similar manner to the control during the addition of the urea water equivalent in amount to the target addition amount QE, such that the urea water equivalent in amount to the second predetermined amount Qb is added to the exhaust gas by the urea water being added in an intermittent manner from the urea adding valve 230.

Then, the processing proceeds to Step S28 and the second NOx concentration N2 detected by the second NOx sensor 150 is stored as a post-addition NOx concentration Nb. The post-addition NOx concentration Nb corresponds to the amount of the NOx that is detected during the execution of the urea water addition. Then, the processing proceeds to Step S29 and the urea water concentration determination and addition execution flag is set to "OFF".

Then, the processing proceeds to Step S30 and it is determined whether or not a value that is obtained by subtracting the post-addition NOx concentration Nb from the pre-addition NOx concentration Na exceeds a predetermined concentration Ns. The predetermined concentration Ns is set to a concentration with which it can be determined, by the value obtained by subtracting the post-addition NOx concentration Nb from the pre-addition NOx concentration Na exceeding the predetermined concentration Ns, that the concentration of the added urea water is adequate. In other words, the processing of Step S30 is to determine whether or not the urea water which has the adequate concentration is added.

Specifically, the predetermined concentration Ns is a concentration that represents the amount of lowering of the NOx concentration of the exhaust gas pertaining to a case where the NOx in the exhaust gas is removed by the SCR catalyst 41 by the urea water which has the adequate concentration being added by the second predetermined amount Qb. The amount of the lowering changes in accordance with the pre-addition NOx concentration Na and the first NOx concentration N1. Accordingly, the predetermined concentration Ns is derived and set based on the pre-addition NOx concentration Na, the first NOx concentration N1, and the like during the processing of Step S30.

In the event of a negative determination in Step S30 (Step S30: NO), it is determined that the concentration of the urea water is not adequate and is abnormal and out of a range of the adequate concentration. Accordingly, the processing proceeds to Step S31 and a urea water concentration abnormality flag is set to "ON". Then, the processing proceeds to Step S32.

In the case of a positive determination in Step S30 (Step S30: YES), it can be estimated that the concentration of the urea water is adequate, and thus the processing proceeds to Step S32. In Step S32, the abnormality determination processing execution flag is turned "OFF" and this processing is terminated.

The abnormality determination processing regarding the urea water concentration is performed in a case where a positive determination is made in Step S20 and where the reducing agent supply mechanism 200 is estimated to function in a normal manner as described above. In contrast, in a case where a negative determination is made in Step S20 illustrated in FIG. 2 (Step S20: NO), the reducing agent supply mechanism 200 is highly likely to be subjected to the abnormality as described above, and thus the processing proceeds to Step S21, an abnormality flag representing that the reducing agent supply mechanism 200 is abnormal is set to "ON", and then this processing is terminated. In other words, in the case of a negative determination in Step S20, this processing is terminated without the abnormality determination processing regarding the urea water concentration being performed.

An effect of this embodiment will be described below. In this embodiment, the urea water concentration abnormality determination device is applied to the exhaust gas control apparatus that is provided with the SCR catalyst 41 which is disposed on the exhaust passage 26 of the engine 1 and the reducing agent supply mechanism 200 which supplies the SCR catalyst 41 with the ammonia originating from the urea water as the reducing agent and that is provided with the second NOx sensor 150 which detects the concentration of the NOx in the exhaust gas on the downstream side of the SCR catalyst 41. As illustrated in Step S20 in FIG. 2, the urea water concentration abnormality determination device executes the urea water concentration abnormality determination processing subsequent to Step S22 on a condition that a difference between the pre-addition exhaust gas temperature Ta which is the third exhaust gas temperature TH3 preceding the execution of the provisional addition of the urea water and the post-addition exhaust gas temperature Tb which is the third exhaust gas temperature TH3 subsequent to the execution of the provisional addition exceeds the predetermined temperature Ts.

When the urea water is added to the exhaust gas, the urea water is exposed to the high-temperature exhaust gas and evaporates. Accordingly, the exhaust gas is deprived of heat by the heat of evaporation of the urea water and the temperature of the exhaust gas is lowered. Accordingly, when the difference between the pre-addition exhaust gas temperature Ta and the post-addition exhaust gas temperature Tb attributable to the provisional addition does not exceed the predetermined temperature Ts, it is estimated that the amount of the heat which the exhaust gas is deprived of by the heat of evaporation of the urea water is small despite the control for the urea water addition from the urea adding valve 230. In this case, the amount of the added urea water is highly likely to decrease or the amount of the evaporating urea water is highly likely to decrease because of the abnormality that the reducing agent supply mechanism 200 is subjected to.

In this regard, in this embodiment, the urea water concentration abnormality determination processing subsequent to Step S22 is executed on the condition that the difference between the exhaust gas temperature during the non-execution of the urea water addition by the urea adding valve 230 and the exhaust gas temperature during the execution of the urea water addition exceeds the predetermined temperature in Step S20 as described above. Accordingly, the concentration abnormality determination processing is executed on a condition that the reducing agent supply mechanism 200 is highly likely to be subjected to no abnormality. In other words, the urea water concentration abnormality determination processing is executed when the reducing agent supply mechanism 200 is highly likely to be subjected to no abnormality whereas the urea water concentration abnormality determination processing is not executed when the reducing agent supply mechanism 200 is highly likely to be subjected to the abnormality.

The following effects can be achieved by this embodiment described above. (1) The urea water abnormality determination device according to this embodiment executes the urea water concentration abnormality determination processing on the condition that the difference between the pre-addition exhaust gas temperature Ta which is the third exhaust gas temperature TH3 preceding the execution of the provisional addition of the urea water and the post-addition exhaust gas temperature Tb which is the third exhaust gas temperature TH3 subsequent to the execution of the provisional addition exceeds the predetermined temperature Ts. Accordingly, the urea water concentration abnormality determination processing is executed on the condition that the reducing agent supply mechanism 200 is highly likely to be subjected to no abnormality. In other words, the urea water concentration abnormality determination processing is executed when the reducing agent supply mechanism 200 is highly likely to be subjected to no abnormality whereas the urea water concentration abnormality determination processing is not executed when the reducing agent supply mechanism 200 is highly likely to be subjected to the abnormality. Accordingly, the risk is suppressed that it is erroneously determined that the urea water concentration is abnormal despite the urea water having in fact the adequate concentration, such an erroneous determination being attributable to the non-supply of the ammonia equivalent in amount to the required amount to the SCR catalyst 41 resulting from the abnormality of the reducing agent supply mechanism 200 despite the urea adding valve 230 being controlled such that the urea water equivalent in amount to the second predetermined amount Qb is added to the exhaust gas for the urea water concentration abnormality determination to be performed.
(2) The urea water abnormality determination device according to this embodiment executes the provisional addition for adding the urea water equivalent in amount to the first predetermined amount Qa from the urea adding valve 230 prior to the abnormality determination processing regarding the urea water concentration, and executes the abnormality determination regarding the urea water concentration on the condition that the amount of the lowering of the third exhaust gas temperature TH3 attributable to the provisional addition exceeds the predetermined temperature Ts. In the urea water concentration abnormality determination processing, it is determined that the urea water concentration is abnormal on the condition that the amount of the lowering of the second NOx concentration N2 detected by the second NOx sensor 150 is equal to or less than the predetermined concentration Ns with the urea water equivalent in amount to the second predetermined amount Qb added from the urea adding valve 230. The first predetermined amount Qa for the provisional addition is larger than the second predetermined amount Qb that is the addition amount for the concentration abnormality determination. Accordingly, the exhaust gas temperature is more likely to be lowered in a case where the provisional addition is executed in a situation in which the reducing agent supply mechanism 200 is subjected to no abnormality than in a case where the urea water equivalent in amount to the second predetermined amount Qb is added to the exhaust gas. Accordingly, the amount of the lowering of the exhaust gas temperature attributable to the provisional addition increases, and thus an erroneous determination of whether or not the reducing agent supply mechanism 200 is abnormal, which is attributable to an error of the detection of the third exhaust gas temperature TH3, can be suppressed during the determination of whether or not the amount of the lowering of the third exhaust gas temperature TH3 exceeds the predetermined temperature Ts as a result of the provisional addition.
(3) In this embodiment, the second predetermined amount Qb, which is the urea water addition amount for the urea water concentration abnormality determination to be performed, is equal to the target addition amount QE that is the urea water addition amount with no excess or deficiency that is required for the reduction treatment of the NOx. The following problem might arise in a case where the second predetermined amount Qb exceeds the target addition amount QE as in a case where the second predetermined amount Qb is equal to the first predetermined amount Qa. In a case where the second predetermined amount Qb exceeds the target addition amount QE, an excessive amount of the ammonia might be supplied to the SCR catalyst 41 and this ammonia might pass through the SCR catalyst 41 and the ammonia oxidation catalyst 51. In this case, the second NOx sensor 150 detects the ammonia passing through the ammonia oxidation catalyst 51 as NOx, and thus the second NOx concentration N2 detected by the second NOx sensor 150 might be an inaccurate concentration. In this regard, the second predetermined amount Qb as the urea water addition amount for the urea water concentration abnormality determination to be performed is equal to the target addition amount QE in this embodiment, and thus the risk can be suppressed that it is erroneously determined that the urea water concentration is abnormal, such an erroneous determination being attributable to the second NOx concentration N2 not being the accurate concentration resulting from the supply of an excessive amount of the ammonia into the exhaust gas, can be suppressed.

The urea water abnormality determination device is not limited to the configuration described above as an example. For example, the urea water abnormality determination device can be appropriately modified to have the following exemplary form. Those that can be combined in the following modification example can be applied to the above-described embodiment in appropriate combination.

In the embodiment described above, the first predetermined amount Qa, which is the amount of the urea water that is provisionally added, exceeds the second predetermined amount Qb, which is the urea water addition amount for NOx abnormality determination. However, the first predetermined amount Qa for the provisional addition may be equal to the second predetermined amount Qb or may be equal to or smaller than the second predetermined amount Qb insofar as the exhaust gas temperature can be lowered in a case where the provisional addition is performed in a state where the reducing agent supply mechanism 200 is normal and the abnormality determination regarding the reducing agent supply mechanism 200 can be performed based on the amount of the lowering of the exhaust gas temperature. In addition, the second predetermined amount Qb may be an amount that is different from the target addition amount QE or may be an amount with which the concentration abnormality of the urea water can be determined by the amount of the lowering of the second NOx concentration N2.

In the embodiment described above, the provisional addition for determining the abnormality of the reducing agent supply mechanism 200 and the addition for performing the abnormality determination regarding the concentration of the urea water are individually performed. However, the addition for determining the abnormality of the reducing agent supply mechanism 200 and the urea water addition for performing the urea water concentration abnormality determination may be performed through a common urea water addition processing without the provisional addition being executed. In this case, for example, the third exhaust gas temperature TH3 and the second NOx concentration N2 are detected first, before the urea water addition is performed, as the pre-addition exhaust gas temperature and the pre-addition NOx concentration, respectively. The urea water concentration abnormality determination processing may be performed thereafter with the third exhaust gas temperature TH3 obtained after the common urea water addition processing is performed being the post-addition exhaust gas temperature and the second NOx concentration N2 being detected as the post-addition NOx concentration on a condition that a value obtained by subtracting the post-addition exhaust gas temperature from the pre-addition exhaust gas temperature exceeds a predetermined temperature.

In the embodiment described above, the abnormality determination processing for the reducing agent supply mechanism 200 is executed once per trip, and the abnormality determination processing regarding the urea water concentration is executed in a case where it is estimated that the reducing agent supply mechanism 200 is not abnormal. However, it is estimated that the urea water concentration is unlikely to fluctuate in a case where the tank is not replenished with new urea water and yields a result that is similar to the previous result, even when the urea water concentration abnormality determination processing is performed, in a case where the tank is replenished with no urea water. Accordingly, it may be determined whether or not the concentration abnormality determination processing has been executed since the most recent urea water replenishment between the processing of, for example, Step S20 and Step S22 and the processing subsequent to Step S22 may be performed only in the case of a negative determination. It can be determined that the tank is replenished with the urea water in a case where, for example, a level sensor is disposed in the tank where the urea water is stored and this sensor detects that the amount of the urea water has increased by at least a predetermined amount. Then, it can be determined whether or not the concentration abnormality determination processing has been executed since the most recent urea water replenishment based on a history of the execution of the concentration abnormality determination processing subsequent to this replenishment determination.

In the embodiment described above, the determination of whether or not the third exhaust gas temperature TH3 is stable may be performed between the processing of Step S 17 and Step S18, this determination may be repeated while the third exhaust gas temperature TH3 is unstable, and the processing may proceed to Step S18 in a case where the third exhaust gas temperature TH3 is stable so that the third exhaust gas temperature TH3 becomes the post-addition exhaust gas temperature Tb. In addition, the determination of whether or not the second NOx concentration N2 is stable may be performed between the processing of Step S27 and Step S28, this determination may be repeated while the second NOx concentration N2 is unstable, and the processing may proceed to Step S28 in a case where the second NOx concentration N2 is stable so that the second NOx concentration N2 becomes the post-addition NOx concentration Nb.

In the embodiment described above, whether or not the temperature of the exhaust gas discharged from the engine 1 is in a stable state or whether or not the concentration of the NOx in the exhaust gas is in a stable state with the engine operation state being stable is estimated by whether or not the vehicle speed SPD is stable and is determined in Step S11 and Step S24. However, whether or not the engine operation state is stable can be detected by another parameter, such as the suctioned air amount GA, as well. Accordingly, it may be determined in Step S11 and Step S24 whether or not a value of another parameter representing the engine operation state is stable. In addition, in Step S24, it may be determined whether a variation of the first NOx concentration N1 is within a predetermined range based on the value of the first NOx concentration N1 of the exhaust gas in front of the SCR catalyst 41.

In the embodiment described above, the processing is terminated in a case where the abnormality flag for the reducing agent supply mechanism 200 is turned "ON" and in a case where the concentration abnormality flag is turned "ON". However, a notifier that notifies the driver of these abnormalities may be disposed in the vehicle and the notifier may be put into operation in a case where these flags are turned "ON" so that the driver of the vehicle receives a notification to that effect. In addition, in a case where the abnormality flag for the reducing agent supply mechanism is turned "ON", an additional processing for identifying the cause may be performed and a processing for resolving the identified abnormality may be performed, examples of which include injection for deposit removal performed in a case where the deposit adhesion to the urea adding valve 230 or the like is identified as the cause. In addition, in a case where the concentration abnormality flag is turned "ON", a processing for causing the urea water addition amount to exceed the normal target addition amount QE or prohibiting the addition may be performed.

In the reducing agent supply mechanism 200, the dispersion plate 60 is an optional configuration and can be omitted. Even in this case, the execution of the concentration abnormality determination processing can be prevented in a case where the urea adding valve 230, the pump 220, and the like are likely to be abnormal based on a determination relating to a change in the exhaust gas temperature.

In the case of the calculation of the predetermined temperature Ts according to the embodiment described above, the amount of the lowering of the temperature attributable to the supply of the urea water into the exhaust gas resulting from the addition of the urea water equivalent in amount to the first predetermined amount Qa and the exhaust gas being deprived of the heat due to the evaporation of almost all the added urea water is regarded as a reference temperature and this reference temperature is corrected. However, this predetermined temperature Ts may also be set with the amount of the lowering of the exhaust gas temperature in the case of a complete evaporation of the added urea water being regarded as the reference temperature. A method for setting the predetermined temperature Ts is not limited to the above-described exemplary aspect and the predetermined temperature Ts may be any temperature at which the abnormality of the reducing agent supply mechanism 200 can be determined. Likewise, a method for setting the predetermined concentration Ns is not limited to the above-described exemplary aspect and the predetermined concentration Ns may be any concentration at which the abnormality of the concentration of the urea water can be determined.

In the embodiment described above, it is determined whether or not the engine operation state is stable and the exhaust gas temperature is stable in the current situation by whether or not the vehicle speed SPD is stable being determined in Step S11. However, for example, whether or not a predetermined period of time has elapsed since the start of a fuel cut may be determined as the engine operation state with a constant exhaust gas temperature. The predetermined period of time in this case may be set to a period in which the exhaust gas temperature is maintained at an exhaust gas temperature close to that immediately subsequent to the start of the fuel cut.

In the embodiment described above, the first NOx sensor 130 and the second NOx sensor 150 detect the NOx concentration of the exhaust gas. However, the amount of the NOx in the exhaust gas may be detected in addition to the NOx concentration of the exhaust gas and the predetermined value may be a value at which the abnormality of the concentration of the urea water can be determined.

## Claims

1. An abnormality determination device for an internal combustion engine (1), the internal combustion engine (1) including a NOx purification catalyst (41) and a reducing agent supply mechanism (200), the NOx purification catalyst (41) being disposed in an exhaust passage of the internal combustion engine (1), the NOx purification catalyst (41) being configured to purify the NOx in the exhaust gas, the reducing agent supply mechanism (200) being disposed on an upstream side of the NOx purification catalyst (41) in the exhaust passage, and the reducing agent supply mechanism (200) adding urea water to the exhaust gas flowing through the exhaust passage such that ammonia originating from the urea water is supplied to the NOx purification catalyst (41) as a reducing agent, the abnormality determination device comprising:
a NOx sensor (150) configured to detect an amount of the NOx contained in the exhaust gas flowing through a downstream side of the NOx purification catalyst (41) in the exhaust passage; and
an electronic control unit (80) configured to determine, as an abnormality determination processing, that a concentration of the urea water is an abnormal concentration in a case where a difference between a first NOx amount and a second NOx amount detected by the NOx sensor (150) is equal to or lower than a predetermined value, the first NOx amount being the amount of the NOx detected by the NOx sensor (150) during non-execution of an addition of the urea water by the reducing agent supply mechanism (200), the second NOx amount being the amount of the NOx detected by the NOx sensor (150) during execution of the addition of the urea water by the reducing agent supply mechanism (200),
**characterized in that**, in addition, the electronic control unit (80) is configured to determine, as an abnormality determination processing, that a concentration of the urea water is an abnormal concentration in a case where a difference between a first exhaust gas temperature and a second exhaust gas temperature exceeds a predetermined temperature, the first exhaust gas temperature being a temperature of the exhaust gas during the non-execution of the addition of the urea water by the reducing agent supply mechanism (200), and the second exhaust gas temperature being the temperature of the exhaust gas during the execution of the addition of the urea water by the reducing agent supply mechanism (200),
the first and second exhaust gas temperatures being measured by an exhaust gas temperature sensor (140) disposed downstream to the NOx purification catalyst (41).

2. The abnormality determination device for the internal combustion engine (1) according to claim 1,
wherein the electronic control unit (80) is configured to control the reducing agent supply mechanism (200) prior to the abnormality determination processing such that the urea water equivalent in amount to a first predetermined amount is added as a provisional addition, the electronic control unit (80) being configured to execute the abnormality determination processing in a case where the amount of lowering of the temperature of the exhaust gas at a time when the provisional addition is performed exceeds the predetermined temperature, the electronic control unit (80) being configured to execute the addition of the urea water equivalent in amount to a second predetermined amount by controlling the reducing agent supply mechanism (200) during the abnormality determination processing, and the second NOx amount being the amount of the NOx detected by the NOx sensor when the addition of the urea water equivalent in amount to the second predetermined amount is performed.

3. The abnormality determination device for the internal combustion engine (1) according to claim 2,
wherein the first predetermined amount is larger than the second predetermined amount.

## Patentansprüche

1. Anomaliebestimmungsvorrichtung für einen Verbrennungsmotor (1), wobei der Verbrennungsmotor (1) einen NOx-Reinigungskatalysator (41) und einen Reduktionsmittelzufuhrmechanismus (200) enthält, wobei der NOx-Reinigungskatalysator (41) in einem Abgasdurchgang des Verbrennungsmotors (1) angeordnet ist, wobei der NOx-Reinigungskatalysator (41) dafür konfiguriert ist, das NOx in dem Abgas zu reinigen, wobei der Reduktionsmittelzufuhrmechanismus (200) auf einer stromaufwärtigen Seite des NOx-Reinigungskatalysators (41) in dem Abgasdurchgang angeordnet ist und der Reduktionsmittelzufuhrmechanismus (200) Harnstoffwasser zu dem Abgas hinzufügt, das durch den Abgasdurchgang strömt, dergestalt, dass Ammoniak, das aus dem Harnstoffwasser stammt, dem NOx-Reinigungskatalysator (41) als ein Reduktionsmittel zugeführt wird, wobei die Anomaliebestimmungsvorrichtung umfasst:
einen NOx-Sensor (150), der dafür konfiguriert ist, einen Betrag des NOx zu detektieren, der in dem Abgas enthalten ist, das durch eine stromabwärtige Seite des NOx-Reinigungskatalysators (41) in dem Abgasdurchgang strömt, und
eine elektronische Steuereinheit (80), die dafür konfiguriert ist, als eine Anomaliebestimmungsverarbeitung zu bestimmen, dass eine Konzentration des Harnstoffwassers eine abnormale Konzentration ist, falls eine Differenz zwischen einem ersten NOx-Betrag und einem zweiten NOx-Betrag, die durch den NOx-Sensor (150) detektiert werden, nicht größer als ein zuvor festgelegter Wert ist, wobei der erste NOx-Betrag der Betrag des NOx ist, der durch den NOx-Sensor (150) während der Nichtausführung einer Zugabe des Harnstoffwassers durch den Reduktionsmittelzufuhrmechanismus (200) detektiert wird, und wobei der zweite NOx-Betrag der Betrag des NOx ist, der durch den NOx-Sensor (150) während der Ausführung einer Zugabe des Harnstoffwassers durch den Reduktionsmittelzufuhrmechanismus (200) detektiert wird,
**dadurch gekennzeichnet, dass** zusätzlich die elektronische Steuereinheit (80) dafür konfiguriert ist, als eine Anomaliebestimmungsverarbeitung zu bestimmen, dass eine Konzentration des Harnstoffwassers eine abnormale Konzentration ist, falls eine Differenz zwischen einer ersten Abgastemperatur und einer zweiten Abgastemperatur eine zuvor festgelegte Temperatur überschreitet, wobei die erste Abgastemperatur eine Temperatur des Abgases während der Nichtausführung einer Zugabe des Harnstoffwassers durch den Reduktionsmittelzufuhrmechanismus (200) ist und die zweite Abgastemperatur die Temperatur des Abgases während der Ausführung einer Zugabe des Harnstoffwassers durch den Reduktionsmittelzufuhrmechanismus (200) ist, und dass
die ersten und zweiten Abgastemperaturen durch einen Abgastemperatursensor (140) gemessen werden, der stromabwärts des NOx-Reinigungskatalysators (41) angeordnet ist.

2. Anomaliebestimmungsvorrichtung für den Verbrennungsmotor (1) nach Anspruch 1,
wobei die elektronische Steuereinheit (80) dafür konfiguriert ist, den Reduktionsmittelzufuhrmechanismus (200) vor der Anomaliebestimmungsverarbeitung dergestalt zu steuern, dass das Harnstoffwasser, dessen Betrag einem ersten zuvor festgelegten Betrag entspricht, als eine provisorische Zugabe hinzugefügt wird, wobei die elektronische Steuereinheit (80) dafür konfiguriert ist, die Anomaliebestimmungsverarbeitung auszuführen, falls der Betrag des Absenkens der Temperatur des Abgases zu einer Zeit, wo die provisorische Zugabe ausgeführt wird, die zuvor festgelegte Temperatur überschreitet, wobei die elektronische Steuereinheit (80) dafür konfiguriert ist, die Zugabe des Harnstoffwassers in einem Betrag auszuführen, der einem zweiten zuvor festgelegten Betrag äquivalent ist, indem der Reduktionsmittelzufuhrmechanismus (200) während der Anomaliebestimmungsverarbeitung gesteuert wird, und der zweite NOx-Betrag der Betrag des NOx ist, der durch den NOx-Sensor detektiert wurde, wenn die Zugabe des Harnstoffwassers in einem Betrag ausgeführt wird, der dem zweiten zuvor festgelegten Betrag äquivalent ist.

3. Anomaliebestimmungsvorrichtung für den Verbrennungsmotor (1) nach Anspruch 2,
wobei der erste zuvor festgelegte Betrag größer ist als der zweite zuvor festgelegte Betrag.

## Revendications

1. Dispositif de détermination d'anomalie pour un moteur à combustion interne (1), le moteur à combustion interne (1) comprenant un catalyseur de purification de NOx (41) et un mécanisme d'alimentation en agent de réduction (200), le catalyseur de purification de NOx (41) étant disposé dans un passage d'échappement du moteur à combustion interne (1), le catalyseur de purification de NOx (41) étant configuré pour purifier le NOx dans le gaz d'échappement, le mécanisme d'alimentation en agent de réduction (200) étant disposé sur un côté en amont du catalyseur de purification de NOx (41) dans le passage d'échappement, et le mécanisme d'alimentation en agent de réduction (200) ajoutant une solution aqueuse d'urée au gaz d'échappement s'écoulant à travers le passage d'échappement de telle sorte que de l'ammoniac provenant de la solution aqueuse d'urée est délivrée au catalyseur de purification de NOx (41) comme agent de réduction, le dispositif de détermination d'anomalie comportant :
un capteur de NOx (150) configuré pour détecter une quantité du NOx contenu dans le gaz d'échappement s'écoulant à travers un côté aval du catalyseur de purification de NOx (41) dans le passage d'échappement ; et
une unité de commande électronique (80) configurée pour déterminer, comme traitement de détermination d'anomalie, qu'une concentration de la solution aqueuse d'urée est une concentration anormale dans un cas où une différence entre une première quantité de NOx et une deuxième quantité de NOx détectées par le capteur de NOx (150) est égale ou inférieure à une valeur prédéterminée, la première quantité de NOx étant la quantité du NOx détectée par le capteur de NOx (150) en l'absence d'exécution d'une addition de la solution aqueuse d'urée par le mécanisme d'alimentation en agent de réduction (200), la deuxième quantité de NOx étant la quantité du NOx détectée par le capteur de NOx (150) pendant une exécution de l'addition de la solution aqueuse d'urée par le mécanisme d'alimentation en agent de réduction (200),
**caractérisé en ce que**, de plus, l'unité de commande électronique (80) est configurée pour déterminer, comme traitement de détermination d'anomalie, qu'une concentration de la solution aqueuse d'urée est une concentration anormale dans un cas où une différence entre une première température de gaz d'échappement et une deuxième température de gaz d'échappement dépasse une température prédéterminée, la première température de gaz d'échappement étant une température du gaz d'échappement en l'absence d'exécution de l'addition de la solution aqueuse d'urée par le mécanisme d'alimentation en agent de réduction (200), et la deuxième température de gaz d'échappement étant la température du gaz d'échappement pendant l'exécution de l'addition de la solution aqueuse d'urée par le mécanisme d'alimentation en agent de réduction (200),
les première et deuxième températures de gaz d'échappement étant mesurées par un capteur de température de gaz d'échappement (140) disposé en aval du catalyseur de purification de NOx (41).

2. Dispositif de détermination d'anomalie pour le moteur à combustion interne (1) selon la revendication 1,
dans lequel l'unité de commande électronique (80) est configurée pour commander le mécanisme d'alimentation en agent de réduction (200) avant le traitement de détermination d'anomalie de telle sorte que la solution aqueuse d'urée en quantité équivalente à une première quantité prédéterminée est ajoutée comme addition provisoire, l'unité de commande électronique (80) étant configurée pour exécuter le traitement de détermination d'anomalie dans un cas où la quantité d'abaissement de la température du gaz d'échappement à un moment où l'addition provisoire est exécutée dépasse la température prédéterminée, l'unité de commande électronique (80) étant configurée pour exécuter l'addition de la solution aqueuse d'urée équivalente en quantité à une deuxième quantité prédéterminée en commandant le mécanisme d'alimentation en agent de réduction (200) pendant le traitement de détermination d'anomalie, et la deuxième quantité de NOx étant la quantité du NOx détectée par le capteur de NOx quand l'addition de la solution aqueuse d'urée équivalente en quantité à la deuxième quantité prédéterminée est réalisée.

3. Dispositif de détermination d'anomalie pour le moteur à combustion interne (1) selon la revendication 2,
où la première quantité prédéterminée est supérieure à la deuxième quantité prédéterminée.
